# EUROPÄISCHE PATENTSCHRIFT

(11) **EP 0 878 297 B1**
(45) Veröffentlichungstag und Bekanntmachung des Hinweises auf die Patenterteilung: **01.09.2010**
(21) Anmeldenummer: 98108016.1
(22) Anmeldetag: 02.05.1998
(51) Int. Cl.: B32B 27/36, B65D 65/40

(54) **Verwendung einer transparenten Polyesterfolie mit hoher Sauerstoffbarriere**
Use of a transparent polyester film with high oxygen barrier property
Utilisation d'une feuille en polyester transparente ayant de bonne propriété de barrière à l'oxygène

(30) Priorität: 15.05.1997 DE 19720506
(43) Veröffentlichungstag der Anmeldung: 18.11.1998
(73) Patentinhaber: Mitsubishi Polyester Film GmbH, 65203 Wiesbaden (DE)
(72) Erfinder: Peiffer, Herbert, 55126 Mainz (DE); Roth, Werner, 65817 Eppstein (DE); Craß, Günter, 65232 Taunusstein-Wehen (DE)
(74) Vertreter: Schweitzer, Klaus

(56) Entgegenhaltungen:
- EP-A- 0 785 067
- WO-A-95/16554
- WO-A-97/32726
- PATENT ABSTRACTS OF JAPAN vol. 1997, no. 09, 30. September 1997 (1997-09-30) & JP 09 118323 A (YAMATO ESURON KK), 6. Mai 1997 (1997-05-06)

## Beschreibung

Die Erfindung betrifft die Verwendung einer transparenten biaxial orientierten Polyesterfolie mit einer Basisschicht, die zu mindestens 80 Gew.-% aus einem thermoplastischen Polyester besteht, und einer Deckschicht.

In vielen Fällen wird bei Lebensmittelverpackungen eine hohe Sperrwirkung gegenüber Gasen, Wasserdampf und Aromastoffen verlangt. Üblicherweise werden deshalb metallisierte oder mit Polivinylidenchlorid (PVDC) beschichtete Polypropylenfolien verwendet. Metallisierte Polypropylenfolien sind jedoch nicht transparent und werden deshalb dort nicht eingesetzt, wo der Blick auf den Inhalt zusätzliche Werbewirksamkeit verspricht. Mit PVDC beschichtete Folien sind zwar transparent, aber die Beschichtung erfolgt - ebenso wie die Metallisierung - in einem zweiten Arbeitsgang, der die Verpackung deutlich verteuert. Ethylen-Vinylalkohol-Copolymere (EVOH) zeigen ebenfalls eine hohe Sperrwirkung. Aber mit EVOH modifizierte Folien sind besonders stark gegenüber Feuchte empfindlich, was den Anwendungsbereich einschränkt. Wegen ihrer schlechten mechanischen Eigenschaften sind sie zudem relativ dick, oder sie müssen kostenintensiv mit anderen Materialien laminiert werden. Außerdem sind sie nach Gebrauch problematisch zu entsorgen. Einige Rohstoffe sind zudem für die Herstellung von Lebensmittelverpackungen ungeeignet bzw. nicht amtlich zugelassen.

Die WO 95/16554 A offenbart Vorformlinge und daraus gefertigte Flaschen, deren Seitenwände aus einer Basisschicht und zwei Deckschichten bestehen, die die Basisschicht einschließen. Die Dicke der Seitenwände der Flaschen liegt im Bereich von 0,5 bis 0,8 mm. Die Vorformlinge und die Flaschen werden durch ein Blasgieß-Verfahren hergestellt. Die Deckschichten enthalten 20 - 80 Gew.-% oder 80 - 100 Gew.-% PEN und 80 - 20 Gew.-% oder 0 - 20 Gew.-% PET, während die Basisschicht aus PET G bzw. einer Polymermischung aus PET und PET G besteht.

Die ältere Anmeldung WO 97/32726 betrifft eine mehrschichtige Polyesterfolie, die aus alternierenden PET- und PEN-Schichten aufgebaut ist, wobei die Mindestanzahl der Schichten 7 oder 13 beträgt. Die jeweiligen beiden Außenschichten bestehen aus dem gleichen Polymer, nämlich entweder beide nur aus PET oder beide nur aus PEN. Eine einheitliche Basisschicht ist nicht vorhanden, vielmehr ist eine Anzahl von alternierenden PEN und PET-Schichten zwischen den beiden Außenschichten angeordnet.

Die ältere Anmeldung EP-A-0 849 075 betrifft eine coextrudierte, siegelfähige Polyesterfolie mit mindestens einer siegelfähigen Deckschicht und einer Polyester-Basisschicht. Die Deckschicht enthält ein Copolymer mit 5 - 95 Gew.-% PEN und 95 - 5 Gew.-% PET. Ist die Glasübergangstemperatur der coextrudierten Folie niedriger als die der Basisschicht, so ist die Glasübergangstemperatur der Deckschicht auch niedriger als die der Basisschicht. Umgekehrt gilt, dass bei einer Glasübergangstemperatur der coextrudierten Folie höher als die der Basisschicht, auch die Glasübergangstemperatur der Deckschicht höher die der Basisschicht ist. Gelöst wird die Aufgabe durch die Verwendung einer biaxial orientierten Polyesterfolie mit einer Basisschicht, die zu mindestens 80 Gew.-% aus einem thermoplastischen Polyester besteht und mindestens einer Deckschicht, wobei die Folie dadurch gekennzeichnet ist, daß die Deckschicht aus einem Polymer oder einem Gemisch von Polymeren besteht, das mindestens 40 Gew.-% Ethylen-2,6-naphthalat-Einheiten und bis zu 35 Gew.-% Ethylen-terephthalat-Einheiten und 0 bis zu 60 Gew.-% Einheiten aus cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt, als Sauerstoffbarrierefolie. Die erfindungsgemäß verwendete Folie ist 4 bis 100 µm dick und weist eine Sauerstoffpermeation gemessen nach DIN 53380, Teil 3 bei einer Foliengesamtdicke von 12 µm von weniger als 80 cm³/m²·bar·d, bevorzugt weniger als 75 cm³/m².bar·d, besonders bevorzugt weniger als 70 cm³/m²·bar·d auf.

Bevorzugt ist eine Polyesterfolie, in der die Polymere der Deckschicht mindestens 65 Gew.-% an Ethylen-2,6-naphthalat-Einheiten und bis zu 35 Gew.-% an Ethylen-terephthalat-Einheiten enthalten. Davon ist wiederum eine solche Polyesterfolie besonders bevorzugt, in der die Polymere der Deckschicht mindestens 70 Gew.-% an Ethylen-2,6-naphthalat-Einheiten und bis zu 30 Gew.-% an Ethylen-terephthalat-Einheiten enthalten. Die Deckschicht kann jedoch auch vollständig aus Ethylen-2,6-naphthalat-Polymeren bestehen.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ring. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-,-C(CH₃)₂-, -C(CF₃)₂-, -O-, -S- oder - SO₂- steht. Daneben sind auch Bisphenole der Formel HO-C₆H₄-C₆H₄-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)Alkandisäuren besonders geeignet, wobei der Alkanteil geradkettig oder verzweigt sein kann.

Das Verfahren zur Herstellung dieser Folie umfaßt das
a) Herstellen einer Folie aus Basis- und Deckschicht(en) durch Coextrusion,
b) biaxiale Verstrecken der Folie und
c) Thermofixieren der verstreckten Folie.

Zur Herstellung der Deckschicht werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300°C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3: 1 bis 5,5:1. Das Querstreckverhältnis liegt allgmein im Bereich von 3,0:1 bis 5,0:1, bevorzugt von 3,5:1 bis 4,5:1.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel HO-(CH₂)ₙ-OH, wobei n eine ganze Zahl von 3 bis 6 darstellt, verzweigte aliphatische Glykole mit bis zu 6 Kohlenstoff-Atomen, aromatische Diole der allgemeinen Formei HO-C₆H₄-X-C₆H₄-OH, wobei X für -CH₂-, -C(CH₃)₂-, -C(CF₃)₂-, -O-, -S- oder -SO₂- steht, oder Bisphenole der allgemeinen Formel HO-C H₆-C₄ H₆-OH eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder (C₁-C₁₆)Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 500 bis 1200 liegen. Falls erwünscht, kann an den jeweiligen Granulaten eine Festphasenkondensation durchgeführt werden, um die benötigten SV-Werte der Materialien einzustellen. Allgemein gilt, daß sich die SV-Werte der Polymerschmelzen für Basis- und Deckschicht(en) um nicht mehr als 200, vorzugsweise nicht mehr als 100, unterscheiden sollten.

Die Polymere für die Deckschicht können auf 3 verschiedene Weisen hergestellt werden:
a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.
c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht kristallinen Charakter aufweist.

In einer weiteren Ausführungsform umfaßt die Folie auf der der Deckschicht abgewandten Seite eine weitere Deckschicht aus Polyethylenterephthalat, die Pigmente enthält.

Die erfindungsgemäß verwendete Folie zeigt eine überraschend hohe Sauerstoffbarriere. Werden dagegen für die Deckschicht(en) Polymere verwendet, die weniger als 40 Gew.-% Ethylen-2,6-naphthalat-Einheiten und mehr als 40 Gew.-% Ethylen-terephthalat-Einheiten enthalten, dann ist die Folie in manchen Fällen zwar etwas weniger durchlässig für Sauerstoff als eine Standardpolyesterfolie (die zu 100 Gew.-% aus Polyethylenterephthalat besteht), die Durchlässigkeit ist jedoch noch immer viel zu hoch. Es wurde sogar gefunden, daß die Sauerstoffbarriere geringer ist als bei einer Standardpolyesterfolie, wenn die Deckschicht 30 bis 40 Gew.-% Ethylen-2,6-naphthalat-Einheiten und 60 bis 70 Gew.-% Ethylen-terephthalat-Einheiten enthält.

Weiterhin zeichnen sich die erfindungsgemäßen Folien dadurch aus, daß die Glasübergangstemperatur T_{g} des (Co)polymers bzw. der (Co)polymere der Deckschicht(en) im Vergleich zum Stand der Technik höher liegt als die Glasübergangstemperatur T_{g} der Polymere der Basisschicht. Die Glasübergangstemperatur der eingesetzten (Co)polymere für die Deckschicht(en) liegt vorzugsweise im Bereich von 80 bis 100 °C. Bei der Bestimmung der Glasübergangstemperaturen mittels Differential Scanning Calorimetry (DSC) können die Übergänge der beiden Schichten nicht unterschieden werden.

Glasübergänge, die beim ersten Aufheizvorgang an biaxial orientierten, wärmefixierten Folien bestimmt werden (im folgenden T_{g}1 genannt), sind durch die Kristallinität sowie die molekularen Spannungen im amorphen Anteil der Proben in ihrem Ausmaß relativ gering, über einen breiten Temperaturbereich verteilt und zu höheren Temperaturen verschoben. Vor allem aufgrund von Orientierungseffekten eignen sie sich nicht zur Charakterisierung eines Polymers. Die Auflösung von DSC-Meßgeräten reicht oft nicht aus, um die wegen der Orientierung und Kristallinität kleinen und "verschmierten" Glasstufen im ersten Aufheizvorgang (T_{g}1) der einzelnen Schichten der erfindungsgemäßen Folie zu erfassen. Wenn die Proben aufgeschmolzen und dann unter ihre Glasübergangstemperatur rasch wieder abgekühlt (abgeschreckt) werden, so werden die Orientierungseffekte eliminiert. Beim erneuten Aufheizen werden dann Glasübergänge (hier als T_{g}2 bezeichnet) gemessen, die eine höhere Intensität haben und charakteristisch sind für die jeweiligen Polymere. Die Glasübergänge der einzelnen Schichten lassen sich allerdings auch hier nicht unterscheiden, weil sich die Schichten beim Aufschmelzen vermischen und die darin enthaltenen Polyester untereinander Umesterungsreaktionen eingehen. Es ist jedoch völlig ausreichend, die T_{g}2 der gesamten coextrudierten Folien mit der T_{g}2 des für die Basisschicht verwendeten Polymers zu vergleichen. In bekannten Folien liegt der T_{g}2-Wert der Basisschicht höher als der der coextrudierten Folie, während der T_{g}2-Wert der Deckschicht niedriger liegt als der der Basisschicht und auch der der coextrudierten Folie. In der erfindungsgemäßen Folie ist dies gerade umgekehrt. Hier liegt der T_{g}2-Wert der coextrudierten Folie höher als der der Basisschicht, aber unterhalb des T_{g}2-Werts der Deckschicht.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten.

Es bietet sich an, diese zusätzlichen Schichten über in-line coating mittels wässriger Dispersionen vor der Querverstreckung auf die Folie aufzubringen.

Die erfindungsgemäße Polyesterfolie enthält vorzugsweise noch eine zweite Deckschicht. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen enthalten kann, welche aber nicht mit der der ersten Deckschicht identisch sein müssen. Die zweite Deckschicht kann auch andere gängige Deckschichtpolymere enthalten.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht(en) ist im allgemeinen größer als 0;1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt 4 bis 100 µm, insbesondere 5 bis 50 µm, vorzugsweise 6 bis 30 µm, wobei die Basisschicht einen Anteil von vorzugsweise etwa 40 bis 90 % an der Gesamtdicke hat.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis bis 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zum Verpacken von Nahrungs- und Genußmitteln.

Zur Charakterisierung der Rohstoffe und der Folien wurden die folgenden Methoden benutzt:
Die Messung der Sauerstoffbarriere erfolgte mit einem OX-TRAN 2/20 von Mocon Modern Controls (USA) entsprechend DIN 53 380, Teil 3.

Zur Bestimmung des SV-Wertes (SV = solution viscosity) wurde eine Polyester-Probe in einem Lösungsmittel (Dichloressigsäure) gelöst. Die Viskosität dieser Lösung sowie die Viskosität des reinen Lösungsmittels wurden in einem Ubbelohde-Viskosimeter gemessen. Aus den beiden Werten wurde der Quotient ermittelt, davon 1,000 abgezogen und dieser Wert mit 1000 multipliziert. Das Resultat war der SV-Wert ("solution viscosity").

Die Reibung wurde nach DIN 53 375 bestimmt. Die Gleitreibungszahl wurde 14 Tage nach der Produktion gemessen.

Die Oberflächenspannung wurde mit der sogenannten Tintenmethode (DIN 53 364) bestimmt.

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Die Glasübergangstemperaturen T_{g}1 und T_{g}2 wurden anhand von Folienproben mit Hilfe der DSC (Differential Scanning Calorimetry) bestimmt. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang T_{g}1 ermittelt. Die Proben zeigten vielfach eine Enthalpierelaxation (ein Peak) zu Beginn des stufenförmigen Glasübergangs. Als T_{g}1 wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, "verschmierten" Übergänge von orientierten, kristallinen Proben nicht ausreichend. Um die thermische Vorgeschichte zu eliminieren, wurden die Proben nach dem Aufheizen 5 Minuten bei 300° C gehalten und dann anschließend mit flüssigem Stickstoff abgeschreckt. Aus dem Thermogramm für das zweite Aufheizen wurde die Temperatur für den Glasübergang T_{g}2 als die Temperatur bei halber Stufenhöhe entnommen.

Die folgenden Beispiele illustrieren die Erfindung. Die verwendeten Produkte (Warenzeichen und Herstellerfirma) sind jeweils nur einmal angegeben und beziehen sich dann auch auf die folgenden Beispiele.

### Beispiel 1

Das Polymer für die Deckschicht wurde durch gemeinsame Polykondensation hergestellt. Dazu wurden Dimethylterephthalat und Naphthalin-2,6-dicarbonsäure-dimethylester in einem Reaktor im Molverhältnis 0,54 : 1,00 (entspricht einer Zusammensetzung von 30 Gew.-% Ethylenterephthalat-Einheiten und 70 Gew.-% Ethylen-2,6-naphthalat-Einheiten im fertigen Copolymer) gemischt und mit Ethyenglykol und 300 ppm Manganacetat als Katalysator versetzt. Bei einer Temperatur von 160 bis 250 °C und bei Atmosphärendruck wurde unter Rühren die Umesterung durchgeführt. Das dabei entstehende Methanol wurde abdestilliert. Anschließend wurde eine äquimolare Menge phosphorige Säure als Stabilisator und 400 ppm Antimontrioxid als Katalysator zugegeben. Bei 280 °C und einem Druck von weniger als 1 mbar wurde dann unter Rühren die Polykondensation durchgeführt. Anhand des am Rührer gemessenen Drehmoments ließ sich das erreichte Molekulargewicht ermitteln. Die Schmelze wurde nach Ende der Reaktion mit Stickstoff aus dem Reaktor gedrückt und granuliert.

### Beispiel 2

Es wurden handelsübliche Polyethylenterephthalat- und Polyethylen-2,6-naphthalat-Granulate verwendet. Die Granulate wurden jeweils etwa 4 h bei einer Temperatur von etwa 160 °C getrocknet und kristallisiert. Anschließend wurden die beiden Materialien in einem Verhältnis von 30 : 70 (30 Gew.-% Polyethylenterephthalat- und 70 Gew.-% Polyethylen-2,6-naphthalat) in einen Mischer gegeben und dort unter Rühren homogenisiert. Die Mischung wurde anschließend in einem Zweischnecken-Compounder (ZSK der Fa. Werner und Pfleiderer, Stuttgart) bei einer Temperatur von etwa 300 °C und einer Verweilzeit von ca. 3 min extrudiert. Die Schmelze wurde zu Strängen extrudiert und in Form von Chips geschnitten. In der Extrusion entstand ein Copolymer durch Reaktion zwischen dem Polyethylenterephthalat und Polyethylen-2,6-naphthalat.

### Beispiel 3

Beispiel 2 wurde wiederholt mit der Abweichung, daß Chips aus Polyethylenterephthalat und Polyethylen-2,6-naphthalat in einem Mischungsverhältnis von 3 : 7 direkt dem Einschneckenextruder für die Folienherstellung zugeführt wurden. Dort wurden die beiden Materialien bei etwa 300 °C extrudiert. Die Schmelze wurde filtriert und in einer Mehrschichtdüse zu einem Flachfilm ausgeformt und als Deckschicht der Basisschicht überlagert. Der Mehrschichtfilm wurde über die Düsenlippe ausgestoßen und auf einer Kühlwalze verfestigt. Die Verweilzeit der beiden Polymere in der Extrusion betrug ca. 5 min. Die weiteren Verarbeitungsschritte waren wie oben angegeben. Auch hier entstand das Copolymer in der Extrusion bei den angegebenen Bedingungen.

### Beispiel 4

Chips aus Polyethylenterephthalat wurden bei 160 °C auf eine Restfeuchte von weniger als 50 ppm getrocknet und dem Extruder für die Basisschicht zugeführt. Daneben wurden Chips aus Polyethylenterephthalat und Polyethylen-2,6-naphthalat (im Gewichtsverhältnis von 3 : 7) ebenfalls bei 160 °C auf eine Restfeuchte von 50 ppm getrocknet und den beiden Extrudern für die Deckschichten zugeführt. Die Bedingungen im Extruder für die Deckschichten waren wie in Beispiel 3.

Durch Coextrusion und anschließende stufenweise Orientierung in Längs- und Querrichtung wurde dann eine transparente dreischichtige Folie mit symmetrischem Aufbau und einer Gesamtdicke von 12 µm hergestellt. Die Deckschichten hatten eine Dicke von jeweils 2,0 µm.

### Basisschicht:

95 Gew.-% Polyethylenterephthalat (RT 49 von Hoechst AG) mit einem SV-Wert von 800 und
5 Gew.-% Masterbatch aus 99 Gew.-% Polyethylenterephthalat und 1,0 Gew.-% Kieselsäurepartikel (^{®}Sylobloc 44 H der Firma Grace) mit einer mittleren Teilchengröße von 4,5 µm.

### Deckschichten:

70 Gew.-% Polyethylen-2,6-naphthalat (^{®}Polyclear N 100 Prepolymer von Hoechst AG) mit einem SV-Wert von 800,
20 Gew.-% Polyethylenterephthalat mit einem SV-Wert von 800 und
10 Gew.-% Masterbatch aus 99,0 Gew.-% Polyethylenterephthalat und 1,0 Gew.-% Kieselsäurepartikel mit einer mittleren Teilchengröße von 2,0 µm.

Die einzelnen Verfahrensschritte waren:

| | | |
|---|---|---|
| Extrusion | Temperaturen: Deckschicht: | 300 °C |
| | Basisschicht: | 300 °C |
| | Temperatur der Abzugswalze: | 30 °C |
| | Düsenspaltweite: | 1 mm |
| | Temperatur der Abzugswalze: | 30 °C |
| Längsstreckung | Temperatur: | 85-135 °C |
| | Längsstreckverhältnis: | 4,0 : 1 |
| Querstreckung | Temperatur: | 85-135 °C |
| | Querstreckverhältnis: | 4,0 : 1 |
| Fixierung | Temperatur: | 230 °C |

Die Folie hatte die geforderte Sauerstoffbarriere.

### Beispeil 5 (nicht erfindungsgemäß)

Analog zu Beispiel 4 wurde durch Coextrusion eine dreischichtige Folie mit einer Gesamtdicke von 12 µm hergestellt. Die Deckschicht A hatte eine Dicke von 2,0 µm, die Deckschicht C von 1,5 µm.

### Basisschicht:

100 Gew.-% Polyethylenterephthalat mit einem SV-Wert von 800

### Deckschicht A:

70 Gew.-% Polyethylen-2,6-naphthalat mit einem SV-Wert von 800,
Polyethylenterephthalat mit einem SV-Wert von 800 und
Masterbatch aus 99,0 Gew.-% Polyethylenterephthalat und 1,0 Gew.-% Kieselsaürepartikel mit einer mittleren Teilchengröße von 2,0 µm.

### Deckschicht C:

80 Gew.-% Polyethylenterephthalat mit einem SV-Wert von 800 und
20 Gew.-% Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

Die Verfahrensbedingungen waren für alle Schichten wie im Beispiel 4.

### Beispiel 6

Eine coextrudierte Folie mit der Rezeptur gemäß Beispiel 5, bei der die Deckschicht A 2,0 µm dick und wie folgt zusammengesetzt war:
90 Gew.-% Polyethylen-2,6-naphthalat mit einem SV-Wert von 800 und
10 Gew.-% Masterbatch aus 99,0 Gew.-% Polyethylenterephthalat und 1,0 Gew.-% Kieselsäurepartikel mit einer mittleren Teilchengröße von 1,0 µm, wurde unter den Verfahrensbedingungen gemäß Beispiel 4 hergestellt.

### Beispiel 7

Eine coextrudierte Folie mit der Rezeptur gemäß Beispiel 5, bei der die Deckschicht A 2,5 µm dick und wie folgt zusammengesetzt war:
90 Gew.-% Polyethylen-2,6-naphthalat mit einem SV-Wert von 800,
10 Gew.-% Masterbatch aus 99,0 Gew.-% Polyethylen-2,6-naphthalat mit einem SV-Wert von 800 und 1,0 Gew.-% Kieselsäurepartikel mit einer mittleren Teilchengröße von 1,0 µm,
wurde unter den Verfahrensbedingungen gemäß Beispiel 4 hergestellt. Doch wurden jetzt die Temperaturen bei der Längs- und Querstreckung um etwa 10 °C angehoben.

### Beispiel 8

Analog zu Beispiel 5 wurde durch Coextrusion eine dreischichtige Folie mit einer Basisschicht und zwei Deckschichten hergestellt. Die Gesamtdicke der Folie betrug 12 µm. Die Deckschicht A hatte dabei eine Dicke von 3, die Deckschicht C von 1,5 µm.

### Basisschicht:

100 Gew.-% Polyethylenterephthalat mit einem SV-Wert von 800

### Deckschicht A:

100 Gew.-% Polyethylen-2,6-naphthalat mit einem SV-Wert von 800

### Deckschicht C:

80 Gew.-% Polyethylenterephthalat mit einem SV-Wert von 800 und
20 Gew.-% Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

### Beispiel 9

Analog zu Beispiel 4 wurde eine coextrudierte Folie hergestellt, wobei jetzt das Copolymer für die Deckschichten nach Beispiel 2 hergestellt wurde. Sonst waren die Bedingungen wie im Beispiel 4 angegeben.

### Beispiel 10

Analog zu Beispiel 4 wurde eine coextrudierte Folie hergestellt, wobei jetzt das Copolymer für die Deckschichten nach Beispiel 1 hergestellt wurde. Sonst waren die Bedingungen wie in Beispiel 4 angegeben.

### Beispiel 12

Es wurde eine dreischichtige Folie wie im Beispiel 7 beschrieben hergestellt mit der einzigen Abweichung, daß die Dicke der Deckschicht A nur 1,0 µm betrug.

### Vergleichsbeispiel V1

Es wurde eine Folie entsprechend Beispiel 11 hergestellt. Für die Deckschicht A wurde jedoch ein Copolyester aus 82 Gew.-% Ethylenterephthalat und 18 Gew.-% Ethylenisophthalat verwendet.

### Vergleichsbeispiel V2

Es wurde eine Folie entsprechend Beispiel 11 hergestellt. Für die Deckschicht A wurde jetzt ein Polymergemisch aus 50 Gew.-% Ethylenterephthalat und 50 Gew.-% Ethylen-2,6-naphthalat verwendet.

### Vergleichsbeispiel V3

Es wurde eine Folie entsprechend Beispiel 11 hergestellt. Für die Deckschicht A wurde jetzt ein Polymergemisch aus 70 Gew.-% Ethylenterephthalat und 30 Gew.-% Ethylen-2,6-naphthalat verwendet.

### Vergleichsbeispiel V4

Es wurde eine Folie entsprechend Beispiel 11 hergestellt. Für die Deckschicht A wurde jetzt ein Polymergemisch aus 90 Gew.-% Ethylenterephthalat und 10 Gew.-% Ethylen-2,6-naphthalat verwendet.

### Vergleichsbeispiel V5

Eine einschichtige PET-Folie wurde mit folgender Schichtzusammensetzung hergestellt:
80 Gew.-% Polyethylenterephthalat mit einem SV-Wert von 800 und
20 Gew.-% Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

### Vergleichsbeispiel V6

Eine einschichtige PEN-Folie wurde mit folgender Zusammensetzung hergestellt:
80 Gew.-% Polyethylen-2,6-naphthalat mit einem SV-Wert von 1000 und
20 Gew.-% Masterbatch aus 99,0 Gew.-% Polyethylen-2,6-naphthalat und 1,0 Gew.-% Kieselsäurepartikel, die zu 50 % eine mittlere Teilchengröße von 2,5 µm und zu 50 % eine mittlere Teilchengröße von 1,0 µm hatten.

Die Folie zeigte zwar gute Barrierewerte; sie ist jedoch aufgrund der hohen Herstellungskosten für Lebensmittelverpackungen ungeeignet.

Die Eigenschaften der gemäß den Beispielen 4 bis 12 und V1 bis V6 hergestellten Folien sind in Tabelle 2 zusammengestellt.

**Tabelle 1**

| Beispiel Nr. | Ethylen-2,6-naphthalat-Einheiten in der Deckschicht A (in Gew.-%) | Ethylenterephthalat-Einheiten in der Deckschicht A (in Gew.-%) | Ethylenisophthalat-Einheiten in der Deckschicht A (in Gew.-%) |
|---|---|---|---|
| 4 | 70 | 30 | 0 |
| 5 | 70 | 30 | 0 |
| 6 | 90 | 10 | 0 |
| 7 | 100 | 0 | 0 |
| 8 | 100 | 0 | 0 |
| 9 | 70 | 30 | 0 |
| 10 | 70 | 30 | 0 |
| 12 | 100 | 0 | 0 |
| V1 | 0 | 82 | 18 |
| V2 | 50 | 50 | 0 |
| V3 | 30 | 70 | 0 |
| V4 | 10 | 90 | 0 |
| V5 | 100 | 0 | 0 |
| V6 | 0 | 100 | 0 |

**Tabelle 2**

| Beispiel Nr. | Foliendicke (µm) | Deckschichtdicke A/C(A) (µm) | Folienaufbau | Sauerstoffpermeation (cm³/m² bar d) | Glanz (60° Meßwinkel) | | Trübung |
|---|---|---|---|---|---|---|---|
| | | | | | A-Seite | C-Seite | |
| 4 | 12 | 2,0/2,0 | ABA | 70 | 175 | 175 | 2,5 |
| 5 | 12 | 2,0/1,5 | ABC | 80 | 174 | 175 | 2,5 |
| 6 | 12 | 2,0/1,5 | ABC | 65 | 176 | 175 | 2,5 |
| 7 | 12 | 2,5/1,5 | ABC | 55 | 155 | 155 | 4,0 |
| 8 | 12 | 3,0/1,5 | ABC | 45 | 160 | 155 | 4,0 |
| 9 | 12 | 2,0/2,0 | ABA | 70 | 175 | 175 | 2,5 |
| 10 | 12 | 2,0/2,0 | ABA | 70 | 175 | 175 | 2,5 |
| 12 | 12 | 1,0/1,0 | ABC | 62 | 160 | 165 | 3,5 |
| V1 | 12 | 3,0 | AB | 102 | 145 | 160 | 3,0 |
| V2 | 12 | 3,0 | AB | 115 | 120 | 150 | 6,5 |
| V3 | 12 | 3,0 | AB | 110 | 120 | 150 | 6,5 |
| V4 | 12 | 3,0 | AB | 95 | 175 | 175 | 1,5 |
| V5 | 12 | 0 | A | 100 | 175 | 178 | 4,0 |
| V6 | 12 | 0 | A | 30 | 175 | 178 | 4,0 |

## Patentansprüche

1. Verwendung einer transparenten, biaxial orientierten Polyesterfolie mit einer Basisschicht, die zu mindestens 80 Gew.-% aus einem thermoplastischen Polyester besteht, und mindestens einer Deckschicht, **dadurch gekennzeichnet, daß** die Deckschicht aus einem Polymer oder einem Gemisch von Polymeren besteht, das mindestens 40 Gew.-% Ethylen-2,6-naphthalat-Einheiten und bis zu 35 Gew.-% Ethylen-terephthalat-Einheiten und 0 bis zu 60 Gew.-% Einheiten aus cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt, wobei die Folie 4 bis 100 µm dick ist und eine Sauerstoffpermeation von weniger als 80 cm³/m²·bar·d gemessen nach DIN 53380 Teil 3 bei einer Foliengesamtdicke von 12 µm aufweist, als Sauerstoffbarrierefolie.

2. Verwendung gemäß Anspruch 1, **dadurch gekennzeichnet, daß** die Deckschicht mindestens 65 Gew.-%, bevorzugt mindestens 70 Gew.-%, an Ethylen-2,6-naphthalat-Einheiten enthält.

3. Verwendung gemäß Anspruch 1 oder 2, **dadurch gekennzeichnet, daß** die Folie eine Sauerstoffpermeation von weniger als 75 cm³/m²-bar·d, besonders bevorzugt weniger als 70 cm³/m²·bar·d, aufweist.

4. Verwendung gemäß einem oder mehreren der Ansprüche 1 bis 3, **dadurch gekennzeichnet, daß** die Deckschicht eine Dicke von 0,2 bis 6 µm, vorzugsweise von 0,3 bis 5,5 µm, besonders bevorzugt von 0,3 bis 5,0 µm, aufweist.

5. Verwendung gemäß einem oder mehreren der Ansprüche 1 bis 4, **dadurch gekennzeichnet, daß** die Folie zweischichtig ist und aus der Basisschicht und der Deckschicht besteht.

6. Verwendung gemäß einem oder mehreren der Ansprüche 1 bis 4, **dadurch gekennzeichnet, daß** die Folie dreischichtig ist und aus der Basisschicht und je einer Deckschicht auf beiden Seiten der Basisschicht besteht.

7. Verwendung gemäß einem oder mehreren der Ansprüche 1 bis 6, **dadurch gekennzeichnet, daß** mindestens eine der Deckschichten pigmentiert ist.

8. Verwendung gemäß einem oder mehreren der Ansprüche 1 bis 7, **dadurch gekennzeichnet, daß** die Folie auf mindestens einer Seite mit einer Corona behandelt ist.

9. Verwendung gemäß einem oder mehreren der Ansprüche 1 bis 8, **dadurch gekennzeichnet, daß** die Folie auf mindestens einer Seite in-line beschichtet ist.

10. Verwendung nach einem oder mehreren der Ansprüche 1 bis 9 zum Verpacken von Nahrungs- und Genußmitteln.

## Claims

1. The use, as oxygen-barrier film, of a transparent, biaxially oriented polyester film having a base layer at least 80 % by weight of which is composed of a thermoplastic polyester, and having at least one outer layer, wherein the outer layer is composed of a polymer or a mixture of polymers which comprises at least 40 % by weight of ethylene 2,6-naphthalate units and up to 35 % by weight of ethylene terephthalate units and from 0 up to 60 % by weight of units from cycloaliphatic or aromatic diols and/or dicarboxylic acids, with the proviso that the Tg2 value of the polyester film is above the T_{g}2 value of the base layer but below the T_{g}2 value of the outer layer, where the thickness of the film is from 4 to 100 µm and the oxygen transmission of the film is less than 80 cm³/m².bar.d, measured to DIN 53380 Part 3 for total film thickness of 12 µm.

2. The use as claimed in claim 1, wherein the outer layer comprises at least 65 % by weight, preferably at least 70 % by weight, of ethylene 2,6-naphthalate units.

3. The use as claimed in claim 1 or 2, wherein the oxygen permeability of the film is less than 75 cm³/m²·bar·d, particularly preferably less than 70 cm³/m²·bar·d.

4. The use as claimed in one or more of claims 1 to 3, wherein the thickness of the outer layer is from 0.2 to 6 µm, preferably from 0.3 to 5.5 µm, particularly preferably from 0.3 to 5.0 µm.

5. The use as claimed in one or more of claims 1 to 4, wherein the film has two layers and is composed of the base layer and the outer layer.

6. The use as claimed in one or more of claims 1 to 4, wherein the film has three layers and is composed of the base layer and a outer layer on each of the two sides of the base layer.

7. The use as claimed in one or more or claims 1 to 6, wherein at least one of the outer layers has been pigmented.

8. The use as claimed in one or more of claims 1 to 7, wherein the film has been corona-treated on at least one side.

9. The use as claimed in one or more of claims 1 to 8, wherein the film is in-line coated on at least one side.

10. The use as claimed in one or more of claims 1 to 9 for the packaging of foodstuffs and of other consumable items.

## Revendications

1. Utilisation d'une feuille de polyester transparente, orientée biaxialement, comportant une couche de base qui consiste au moins à 80 % en poids en un polyester thermoplastique et au moins en une couche de revêtement, **caractérisée en ce que** la couche de revêtement est constituée d'un polymère ou d'un mélange de polymères qui contient au moins 40 % en poids de motifs d'éthylène-2,6-naphtalate et jusqu'à 35 % en poids de motifs d'éthylène téréphtalate et de 0 à 60 % en poids de motifs de diols cyclo-aliphatiques ou aromatiques et/ou d'acides dicarboxyliques, à condition que la valeur T_{g}2 de la feuille de polyester soit supérieure à la valeur T_{g}2 de la couche de base mais inférieure à la valeur T_{g}2 de la couche de revêtement, la feuille présentant une épaisseur de 4 à 100 µm et une perméation d'oxygène inférieure à 80 cm³/m². bar.d, mesurée selon la norme DIN 53380, partie 3, avec une épaisseur totale de feuille de 12 µm, comme feuille servant de barrière à l'oxygène.

2. Utilisation selon la revendication 1, **caractérisée en ce que** la couche de revêtement contient au moins 65 % en poids, de préférence, au moins 70 % en poids de motifs d'éthylène-2,6-naphtalate.

3. Utilisation selon la revendication 1 ou 2, **caractérisée en ce que** la feuille présente une perméation de l'oxygène inférieure à 75 cm³/m²·bar·d, de manière particulièrement préférée, inférieure à 70 cm³/m²·bar·d.

4. Utilisation selon une ou plusieurs des revendications 1 à 3, **caractérisée en ce que** la couche de revêtement présente une épaisseur de 0,2 à 6 µm, de préférence, de 0,3 à 5,5 µm, de manière particulièrement préférée, de 0,3 à 5,0 µm.

5. Utilisation selon une ou plusieurs des revendications 1 à 4, **caractérisée en ce que** la feuille est une feuille à deux couches et est constituée de la couche de base et de la couche de revêtement.

6. Utilisation selon une ou plusieurs des revendications 1 à 4, **caractérisée en ce que** la feuille est une feuille à trois couches et est constituée de la couche de base et respectivement, d'une couche de revêtement des deux côtés de la couche de base.

7. Utilisation selon une ou plusieurs des revendications 1 à 6, **caractérisée en ce qu'**au moins l'une des couches de revêtement est pigmentée.

8. Utilisation selon une ou plusieurs des revendications 1 à 7, **caractérisée en ce que** la feuille est traitée au moins d'un côté, avec un traitement corona.

9. Utilisation selon une ou plusieurs des revendications 1 à 8, **caractérisée en ce que** la feuille est revêtue en ligne sur au moins un côté.

10. Utilisation selon une ou plusieurs des revendications 1 à 9, pour le conditionnement d'aliments et de produits d'agrément.
